# EUROPEAN PATENT SPECIFICATION

(11) **EP 2 799 905 B1**
(45) Date of publication and mention of the grant of the patent: **10.04.2019**
(21) Application number: 13177683.3
(22) Date of filing: 23.07.2013
(51) Int. Cl.: G01S 15/93, G01S 15/32, G01S 7/52

(54) **High sensitive apparatus for car parking ultrasonic sensors and method thereof**
Hochempfindliche Vorrichtung für Parkhilfe-Unterschallsensoren und Verfahren dafür
Appareil à sensibilité élevée de capteurs à ultrasons de parcage de véhicule et procédé associé

(30) Priority: 03.05.2013 EP 13166396
(43) Date of publication of application: 05.11.2014
(73) Proprietor: Ceusonic GmbH, 73732 Esslingen (DE)
(72) Inventor: Ivchenko, Vladimir, Nottinghamsghire NG8 3DZ (GB); Nolle, Markus, 73732 esslingen (DE); Challis, Richard, Northumberland NE47 0HH (GB); Tweedie, Richard, Staffordshire St5 5AD (GB)
(74) Representative: Witte, Weller & Partner Patentanwälte mbB

(56) References cited:
- EP-A2- 0 430 148
- EP-A2- 0 969 292
- DE-A1-102010 033 210
- DE-A1-102011 102 202
- US-A- 4 167 879
- US-A1- 2012 314 541
- CARMEN PERÃ CR Z RUBIO M ET AL: "Correlator Implementation for Orthogonal CSS Used in an Ultrasonic LPS", IEEE SENSORS JOURNAL, IEEE SERVICE CENTER, NEW YORK, NY, US, vol. 12, no. 9, 1 September 2012 (2012-09-01), pages 2807-2816, XP011454837, ISSN: 1530-437X, DOI: 10.1109/JSEN.2012.2204046

## Description

### Background art

The invention generally relates to the detection of targets and to distance measurement by means of ultrasound for parking assisting systems.

In particular the present invention relates to a method of high sensitive detection of targets, in particular for measuring the distance from obstacles in the surroundings of a vehicle, by means of ultrasound, wherein an encoded excitation sequence is sent to an electronic transmitter transducer and then emitted in form of encoded ultrasonic pulses into air, wherein reflected ultrasonic echoes are detected by an ultrasonic receiver transducer and processed to obtain target or distance information.

Further, the invention relates in particular to a high sensitive apparatus for car parking ultrasonic sensors, measuring the distance from obstacles in the surroundings of a vehicle, preferably by a method as mentioned above, comprising a control unit, said control unit coordinates sending excitation sequences, correlation and detection of distances to obstacles; a Pseudo Noise (PN) code generator, said code generator produces encoded sequences; a transmitter amplifier receiving the encoded sequences and used to adjust excitation pulses energy to a level required for a transmitter transducer; a receiver transducer for receiving ultrasonic signals, a receiver amplifier adjusting the received signal amplitude of the receiver transducer to the input voltage span of an analog-digital converter (ADC), and matching a transducer impedance with an ADC input impedance; the ADC converting the received signal to digital form required by a digital correlator; the digital correlator performing correlation operation; and a distance detector determining distances to obstacles on the basis of the correlation operation.

Conventional ultrasound parking assistance systems employ a mode with single excitation pulse driving ultrasonic transducer. An ultrasonic wave emitted by the transmitter transducer propagates in air and, being reflected by surrounding obstacles, returns back to the receiver transducer. The received electronic signal of the receiver transducer is significantly attenuated, thus it undergoes amplification before being used for detection of distances to obstacles. Amplification inherently brings electronic noise to the useful signal, reducing the signal to noise ratio (SNR) and masking fine details of environmental reflections. This reduction aggravates sensitivity of distance measurement procedures, restricting the maximum range at which the obstacles can be detected.

Generally, ultrasonic systems utilise higher voltage excitation pulses to increase the emitted energy of ultrasonic waves and the corresponding received amplitude of the signal to improve SNR. In automotive parking applications the excitation voltage usually reaches values below than 100V. There are two restrictions imposed on increasing the excitation voltage. First one is a limited headroom for the absolute maximum voltage ratings of electronic components used in the system. The second restriction is imposed by the transducer components themselves. High voltage and high energetic pulses cause degradation of features and damage the piezoelectric elements of the transducers.

A more sophisticated solution for improving SNR is to use an encoded excitation along with corresponding post-processing. Virtually unrestricted improvement of SNR can be obtained by employing Pseudo Noise (PN) encoded sequences that can be set as long as necessary for required growth of SNR. A PN code pair is a pair of binary sequences A and B with the property that the sum of the autocorrelations of the two sequences is a delta function. The energy contained in a long transmit pulse sequence is compressed into a short time interval on receiver end by virtue of the code. Coded excitation is a well-known technique in non-destructive testing. Use of long encoded sequences for pulse-echo distance measurement is usually limited by the need to end the transmission of the sequence before reflections of its first pulses returns back to ultrasonic transducer.

The above description of technical details is no admission of prior art. Instead, features and embodiments mentioned above may be non prior art, but based on know how.

Systems and methods for measuring distances using ultrasonics are known for example from EP 0 969 292 A2. In this application a distance measuring system is disclosed, which may be used as an altimeter for a helicopter or for a load carried by its winch. The system comprises: a transmitting transducer for converting a first modulated electrical signal into a corresponding acoustic signal to be directed towards and reflected by a surface; a receiving transducer for converting the received reflected acoustic signal into a corresponding second electrical signal; and a correlation processor for receiving the second electrical signal, or the first and second electrical signals, and correlating the modulations thereof to produce an indication of a time delay thereof from which the distance traveled by the acoustic signal can be determined.

In DE 10 2010 033 210 A1 a method for operating an ultrasonic sensor in a drive assistance system in a motor vehicle is disclosed, wherein the method comprises different modulation procedures which can be adapted for different requirements of the driving assistance system.

From US 2012/0314541 A1 it is known to use different lengths of encoded sequences in an ultrasonic-based distance detection, which length is chosen with respect to a speed of a moving body which comprises the distance detection apparatus.

From the article "Correlator Implementation for Orthogonal CSS Used in an Ultrasonic LPS" an architecture for the correlation of orthogonal complementary sets of sequences is known. In this article an optimization of the correlation by using fewer operations and memory elements is presented and the hardware implementation of said proposed optimization is discussed. Furthermore, an ultrasonic local positioning system is presented.

In EP 0 430 148 A2 a distance measurement method and apparatus, and relative position measurement apparatus are disclosed. In this application the distance measurement is done via a cross-correlation of a reflected pseudo noise sequence with the expected measurement values.

In DE 10 2011 102 202 A1 a method and an apparatus for measuring the nearfield in a vehicle by exploiting a correlation is disclosed.

### Statement of invention

The main objective of the present invention is to provide an improved high sensitive apparatus for car parking ultrasonic sensors and method thereof, wherein particularly the SNR and/or the maximum range at which obstacles an be detected, are improved.

The above object is achieved by a method of claim 1, wherein the length of the encoded excitation sequence is free from restriction of the time of flight (106) of an ultrasonic signal wave on the way from the transmitter transducer to at least one target and back to the receiver transducer, and is adjusted in dependence on and according to the requirements for the signal-to-noise ratio to control the sensitivity of target or distance detection and can be longer than the time of flight, wherein a parasitic electronic and acoustic cross-talk signal that penetrates from a transmitter chain to a receiver chain is present at the input of an analog-digital converter of the receiver chain along with said ultrasonic echoes, said parasitic signal is cancelled by a correlation operation, particularly a cross-correlation-operation, wherein energy of said parasitic signal is concentrated in a single pulse on an equivalent time-domain waveform, said pulse is a correlation function of the encoded excited sequence and of the penetrated signal, said pulse is located at time, exactly corresponding to the excitation pulse position of a conventional pulsed system, the parasitic penetrated signal is an incomplete attenuated copy of the excitation sequence, the incompleteness causes some sidelobes of cross-correlation function, said sidelobes are located before the time corresponding to the time of starting the acquisition of the input signal by the correlator, thus said sidelobes and said pulse are located outside of the obtained ultrasonic echoes waveform and do not interfere with the distance detection procedure.

Furthermore, the above object is achieved by a high sensitive apparatus according to claim 10, wherein the apparatus is adapted and operable to have an encoded excitation sequence last longer than the time of flight of an ultrasonic signal wave on the way from the transmitter transducer to at least one target and back to the receiver transducer.

The time duration of sending may even be longer than the time of flight if the distance between the transducers and the target is longer than a threshold distance.

The threshold distance can be a fixed threshold distance, but can be also a variable threshold distance depending on operation parameters.

In case that the threshold distance is a fixed threshold distance, it is preferred if the threshold distance is 2 cm, wherein it is even more preferred if the threshold distance is 5 cm, preferably 10 cm, and particularly preferred 25 cm. In another preferred embodiment, the fixed distance is 50 cm.

In case that the threshold distance is a variable distance, a preferred range is from 2 cm to 500 cm, particularly from 5 cm to 300 cm, and even more preferred from 10 cm to 300 cm, and even more preferred from 5 cm to 200 cm.

It is to be understood that the time duration of sending the encoded ultrasonic pulses can also be longer than the time of flight if the distance between the transducers and the target is shorter than the threshold distance.

Therefore, at least in some cases of the operation of the inventive high sensitive apparatus, the generated encoded excitation sequence lasts longer than travel time of ultrasonic wave from the transmitter transducer to obstacles and back to the receiver transducer. The length of the sequence is preferably set accordingly to attenuation at the interrogation distance to satisfy the requirements to SNR and the corresponding sensitivity of detection the obstacles. Reception of reflected ultrasonic echoes preferably starts before the arrival of the first reflection and preferably operates simultaneously with the continuing transmission of the excitation sequence. The transmission and the reception are preferably carried through a single or a dual element ultrasonic transducer, wherein an inherent parasitic cross-talk-penetrated portion of excitation sequence in the receiver chain is preferably eliminated by the following correlation of said penetrated sequence with its reference source sequence. Result of correlation preferably presents in the time-domain waveform in the form of a main echo serving for distance measurements and a condensed pulse bearing the energy of the parasitic signal at the time position separated from the main echo.

Preferably, the length of the encoded excitation sequence is variable depending on the time of flight, wherein the length is selected such that the longer the time of flight is, the longer is the length of the encoded excitation sequence.

With this preferred embodiment, a good SNR can be achieved even at larger distances between the transducers and the target.

In another preferred embodiment, the length of said encoded excitation sequence is free from restriction of the time of flight, and is adjusted in dependence on and according to the requirements for the signal-to-noise ratio (SNR) to control the sensitivity of target or distance detection.

In other words, the length of the encoded excitation sequence can be chosen such that it is longer than the time of flight, although this is not necessarily so at certain distances.

For instance, at very large distances between the transducers and the target (e.g. longer than 200 or 300 cm), even with long encoded excitation sequences, the time of flight of the ultrasonic wave may be shorter than the time span of sending the encoded excitation sequence.

In another preferred embodiment, the transmission of the excitation sequence and the reception of the reflected ultrasonic echoes operate simultaneously.

In this case, which is particularly true if the length of the encoded excitation sequence is selected such that the time duration of sending the encoded ultrasonic pulses into air is longer than the time of flight, cross-talk between a transmission chain and a reception chain of a high sensitive detection apparatus can occur. Such cross-talk can preferably be eliminated by a subsequent correlation of the penetrated (i.e. received) sequence with a reference source sequence (preferably the transmitted sequence).

In many applications, it is sufficient if one single encoded excitation sequence is sent, wherein the reflected signal is digitized and correlated with the sequence that has been sent.

In another preferred embodiment, the encoded excitation sequence is composed of two complimentary binary Pseudo Noise (PN) sequences A and B which are sent consecutively, wherein the PN sequences A and B are correlated, particularly cross-correlated, consecutively by a correlator.

The cross-correlation or auto-correlation is preferably in this case a delta function, and the energy contained in a long transmit pulse sequence is preferably compressed into a short time interval on the receiver and by virtue of the code.

Further, it is in this case particularly preferred, if the results of the correlation are combined to a sum that represents a time-domain waveform, wherein a time-domain waveform portion is equivalent to the ultrasonic echo caused by a conventional single excitation pulse, thus providing timing information for detection of targets, particularly distances to obstacles in the surroundings of the vehicle.

In a preferred embodiment of the inventive method, a parasitic electronic and acoustic cross-talk signal that penetrates from a transmitter chain to a receiver chain is present at the input of an analog-digital converter of the receiver chain along with the ultrasonic echoes, said parasitic signal being canceled by a correlation operation, particularly a cross-correlation operation, wherein energy of said parasitic signal is concentrated into a single pulse on the equivalent time-domain waveform, wherein said pulse is a correlation function of the PN sequences and of the penetrated signal, wherein said pulse is located at a time in the time-domain waveform, which exactly corresponds to the excitation pulse position of a conventional (single) pulsed system, wherein the parasitic penetrated signal is an incomplete attenuated copy of the excitation sequences, wherein the incompleteness causes some sidelobes of cross-correlation function, said sidelobes being located before a time in the time-domain waveform which corresponds to the time of starting the acquisition of the input signal by the correlator, so that said sidelobes and said pulse are located outside of the obtained ultrasonic echoes waveform in the time-domain, and do not interfere with the distance detection procedure.

In another preferred embodiment of the present invention, the method includes the following steps:
A Start sending of an excitation Pseudo Noise (PN) sequence (PN) sequence A at a time T0;
B Wait for period of time for which the reflected ultrasonic echoes do not bear useful information, wherein this waiting period can be zero or greater than zero;
C Enable acquisition of data at a second time, wherein the input signal of the correlator is to be correlated with the corresponding reference PN sequence A;
D Wait for end of PN sequence A;
E Wait for the time interval long enough to receive echoes from farthest targets and stop receiving input data;
F Complete correlation operation;
G Repeat steps A-F for PN sequence B;
H Sum the correlation results for the PN sequences A and B, the result being the time-domain waveform equivalent to an ultrasonic echo of a conventional single excitation pulse, plus a condensed pulse with sidelobes bearing the energy of a parasitic signal;
I Process the time-domain waveform to detect distances to surrounding objects.

Finally, it is overall preferred if the received ultrasonic signal is converted into a digital received signal, wherein the encoded excitation sequence and the digital received signal are correlated so as to achieve timing information that allows to calculate a distance between the transducers and the target.

In the high sensitive apparatus according to the invention, it is preferred if the transmitter transducer and the receiver transducer are formed by separate transducer elements.

In this case, it is particularly preferred if the two transducers are located close to each other, particularly adjacent to each other.

The distance between the transducers is preferably smaller than 10 cm, particularly smaller than 5 cm, and particularly smaller than 2 cm.

It is particularly preferred if the transmitter transducer and the receiver transducer are in this case arranged in a common sensor enclosure.

This allows to manufacture and fit the apparatus easily into a car body or a car bumper or the like.

In another preferred embodiment, the transmitter transducer and the receiver transducer are formed by a single transducer element for transmission and reception, wherein the apparatus comprises an adaptor front-end, said front-end being adapted to isolate a signal input from a signal output and a transitter chain from a receiver chain, respectively.

Finally, it is preferred if the code generator of the high sensitive apparatus produces encoded sequences of variable lengths to adjust the distance detection sensitivity.

Further scope of the applicability of the present invention will become apparent from the detailed description given hereinafter. However, it should be understood that the detailed description and specific examples, while indicating preferred embodiments of the present invention, are given by way of illustration only.

It will be understood that the features of the invention mentioned above and those yet to be explained below can be used not only in the respective combination indicated, but also in other combinations or in isolation, without leaving the scope of the present invention.

Exemplary embodiments of the invention are explained in more detail in the following description and are represented in the drawings, in which:
- figure 1: shows a high sensitive ultrasonic sensor arrangement with two ultrasonic transducer elements, comprising disclosed apparatus according to an embodiment of the present invention;
- figure 2: shows another arrangement of high sensitive ultrasonic sensor with one ultrasonic transducer element, comprising disclosed apparatus according to an embodiment of the present invention;
- figure 3: shows a timing diagram of signals produced and received by the disclosed apparatus according to an embodiment of the present invention;
- figure 4: shows a derived time-domain waveform, obtained as a result of correlation operation according to an embodiment of the present invention.

### Detailed description

The present invention provides a mechanism for increasing measurements sensitivity and associated with it distance at which ultrasonic parking sensors can detect and distinguish surrounding obstacles. The increase is possible owing to improving the SNR. This also allows extra sensitivity headroom for measurements through hiding surfaces of such car components like bumpers and doors.

Hereinafter, exemplary embodiments of the present invention will be described with reference to the accompanying drawings. In the following description of the present invention, a detailed description of known functions and configurations incorporated herein will be omitted as not bearing essential features of the present invention.

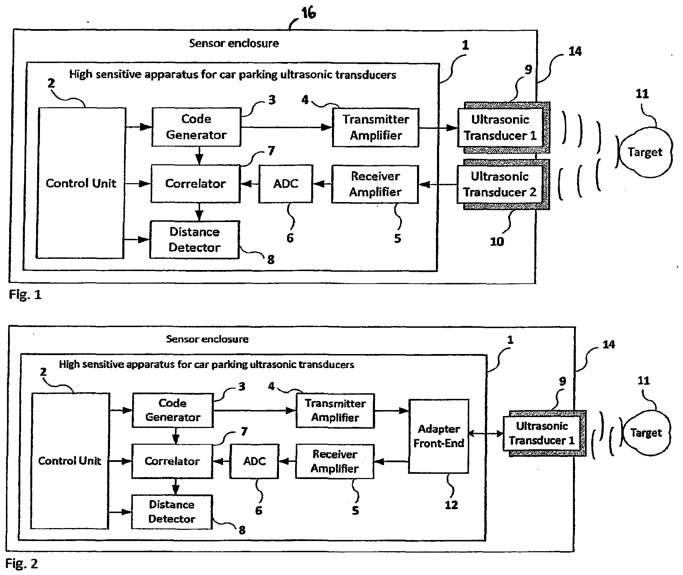

With reference to Fig. 1, the preferred embodiment of high sensitive apparatus 1 for car parking ultrasonic sensors incorporates a control unit 2, said control unit coordinates sending excitation sequences, the correlation and the detection of distances to obstacles. A PN code generator 3 sequentially produces encoded PN sequences A and B. The length of said sequences is adjustable to control the sensitivity of detection the distance. The code generator 3 drives a transmitter amplifier 4 used to adjust the excitation pulses energy to required level. The transmitter amplifier 4 drives a transmitter ultrasonic transducer 9. A receiver amplifier 5 adjusts the signal received by a receiver transducer 10 to fit it to ADC 6 input voltage span and matches receiver transducer 10 impedance with the ADC 6 input impedance. The ADC 6 converts the received signal to digital form required by a digital correlator 7. The correlator 7 implements correlation operation between the received signal and the reference encoded sequence (e.g. the transmitted sequence). The control unit 2 enables the correlator 7 to start accepting input data at a time before the excitation sequence ends, thus allowing simultaneous transmission and reception. The correlator 7 of the current embodiment also produces the summing of the correlation results for sequences A and B, wherein result of the summing is a time-domain representation of echo waveform that could be produced by a single conventional excitation pulse. Said time-domain waveform is sent to distance detector 8. The distance detector 8 applies any of the known algorithms to detect timing of reflections and calculates the corresponding distances to the surrounding obstacles.

Instead of sending two encoded sequences A and B, it is in many cases sufficient to send only one encoded sequence at a time, and correlate same with the echo produced therefrom.

Furthermore, the transmitter transducer 9 and the receiver transducer 10 are enclosed in a common sensor enclosure, and are arranged preferably close to each other, preferably adjacent to each other.

With reference to Fig. 2, another embodiment of the high sensitive apparatus for car parking ultrasonic sensors employs a single ultrasonic transducer 9. In addition to the embodiments shown on Fig.1 this modification comprises an adapter front-end 12 that passes excitation pulses to the transducer and detects and sends the signal of reflections to the receiver amplifier 9. One of example implementations of the adapter front-end 12 can be an operational amplifier, wherein a non-inverting input of the operational amplifier is connected to the transmitter amplifier 4 output and wherein an inverting input is connected to output of additional reference transmitter amplifier, which reproduces same excitation sequence. Output of the operational amplifier could contain the signal of reflections plus some residual portion of the excitation sequence supressed as much as a common mode rejection ratio of the operational amplifier permits.

Either of embodiments of the present invention shown on Fig. 1 and Fig. 2 is designed to be placed with the transducers in a common enclosure of ultrasonic sensor 14. The embodiment presented on Fig. 1 can be placed in the ultrasonic sensor enclosure together with the two transducers 9, 10. Another embodiment shown on Fig. 2 is to be placed with the single transducer 9 in the common enclosure.

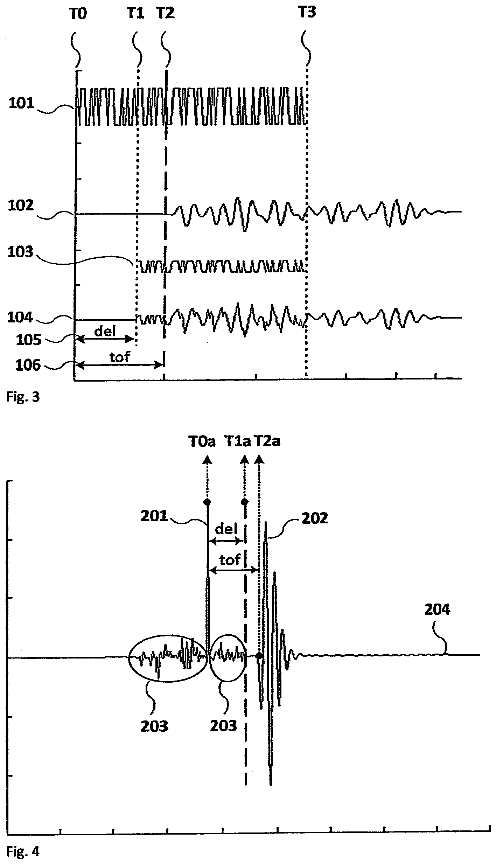

With reference to Fig. 3, according to the present invention the apparatus 1 produces an excitation sequence of pulses 101 driving an ultrasonic transducer. The sequence lasts from time T0 to time T3. The pulses 102 reflected from target 11 returns back to the ultrasonic transducer at time T2, upon passing a time of flight tof 106. The apparatus starts the receiving operation upon passing delay time del 105 at time T1, that is set to be less than tof 106 to be able to acquire the reflections from necessary obstacles.

Waveforms presented on Fig. 3 apply equally for both excitation PN sequences A and B, that are being sent sequentially.

The length of the excitation sequence can be set by the control unit 2. The length of the sequence is set to be long enough to increase the SNR to the required level. SNR increases as a square root of the total length of both sequences A and B. With the speed of sound in air 340 m/s the time of flight for distance 1m is around 0.6ms. When ultrasonic transducers with centre frequency 50 kHz are used, the excitation sequence with total length 100-1000 pulses provides 20-30 dB SNR improvement and lasts 2-20ms that is longer than the time of flight. Thus the control unit 2 sets the code generator 3 to generate the excitation sequence 101 lasting longer than said time of flight 106. Transmitting and receiving operations are carried out simultaneously in the time duration starting at time T1 corresponding to the end of delay time del 105 and ending when reflection from farthest distinguishable obstacle arrives.

With further reference to Fig. 3, a parasitic electronic and acoustic cross-talk signal 103 penetrates from transmitter to receiver chain and it is present at the ADC 6 input 104 along with said ultrasonic echoes 102.

With reference to Fig. 4, a waveform 202 equivalent to ultrasonic echo caused by a conventional single excitation pulse is produced by the correlator 7. Two copies of the signal arriving at input 104 corresponding to PN sequences A and B being cross-correlated consecutively in the correlator 7 with reference sequences A and B and the results are added to form a sum that represents a time-domain waveform portion 204, wherein one time-domain waveform portion 202 is an equivalent to the ultrasonic echo caused by a conventional single excitation pulse. The waveform portion 202 provides timing information for detection of distances to obstacles by the distance detector 8. Time of arrival of the first excitation pulse reflection T2 is equal to the corresponding time T2a of beginning of the derived waveform 202.

The parasitic signal 103 is cancelled by cross-correlation operation by the correlator 7, wherein the energy of said parasitic signal is concentrated in a single pulse 201 on said equivalent time-domain waveform 204. The pulse 201 is a correlation function of the PN sequence 101 and of the penetrated signal 103, said pulse is located at time T0a, exactly corresponding to the excitation pulse position of the conventional pulsed system. The parasitic signal 103 is an incomplete attenuated copy of the excitation sequence 101; the incompleteness causes some sidelobes 203 of cross-correlation function. An important feature of the current invention is that said sidelobes 203 are located before the time T1a corresponding to the time T1 of start the acquisition of the input signal 104 by the correlator 7, thus said sidelobes 203 and said pulse 201 are located outside of the obtained ultrasonic echo waveform 202 and do not interfere with the distance detection procedure.

According to the current invention the method implementing a high sensitive operation of the disclosed apparatus comprises preferably at least one of the following steps:
A Start sending the excitation PN sequence A 101 at the time T0;
B Wait for period of time del 105 for which the reflected ultrasonic echoes do not bear useful information;
C Enable acquisition of data at time T1, the input signal 104 of the correlator 7 is to be correlated with the corresponding reference PN sequence A;
D Wait for end of PN sequence A 101;
E Wait for the time interval long enough to receive echoes from farthest targets and stop receiving input data 104;
F Complete correlation operation;
G Repeat steps A-F for the PN sequence B;
H Sum the correlation results for the PN sequences A and B, the result being the time-domain waveform equivalent to ultrasonic echo 202 of the conventional excitation pulse, plus the condensed pulse 201 with the sidelobes 203 bearing the energy of the parasitic signal;
I Process the time-domain waveform 204 to detect distances to surrounding objects.

In a preferred embodiment, there is disclosed an apparatus 1 for car parking ultrasonic sensors and a corresponding method increasing sensitivity and distance of objects detection in vehicle surrounding by utilising PN encoded excitation sequences of ultrasonic pulses. Duration of said excitation sequences exceeds time of flight of ultrasonic wave from ultrasonic transducer 9 to object 11 and back to transducer 10, thus imposing a simultaneous operation of transmission the sequence and reception of ultrasonic echoes. The inherent effect of parasitic cross-talk from transmitting to receiving chains is eliminated.

It should be understood that the foregoing is illustrative and not limiting, and that obvious modifications may be made by those skilled in the art.

The present application discloses in particular the aspects defined in the following clauses which form part of the present description, and may be combined with features of the claims, but which are not claims in accordance with decision J 15/88 of the Legal Board of Appeal of the European Patent Office.

## Claims

1. A method of high sensitive detection of targets (11), in particular for measuring the distance from obstacles in the surroundings of a vehicle, by means of ultrasound, wherein an encoded excitation sequence (101) is sent to an ultrasonic transmitter transducer (9) and then emitted in form of encoded ultrasonic pulses into air, wherein reflected ultrasonic echoes are detected by an ultrasonic receiver transducer (10;9) and processed to obtain target or distance information,
**characterized in that**
the length of the encoded excitation sequence (101) is free from restriction of a time of flight (106) of an ultrasonic signal wave on the way from the transmitter transducer (9) to at least one target (11) and back to the receiver transducer (10; 9), and is adjusted in dependence on and according to the requirements for the signal-to-noise ratio to control the sensitivity of target or distance detection and can be longer than said time of flight (tof, 106),
wherein a parasitic electronic and acoustic cross-talk signal (103) that penetrates from a transmitter chain to a receiver chain is present at the input (104) of an analog-digital converter (6) of the receiver chain along with said ultrasonic echoes (102), said parasitic signal is cancelled by a correlation operation, particularly a cross-corretation operation, wherein energy of said parasitic signal is concentrated in a single pulse (201) on an equivalent time-domain waveform (204), said pulse (201) is a correlation function of the encoded excited sequence (101) and of the penetrated signal (103), said pulse is located at time (T0a), exactly corresponding to the excitation pulse position of a conventional pulsed system, the parasitic penetrated signal (103) is an incomplete attenuated copy of the excitation sequence (101), the incompleteness causes some sidelobes (203) of cross-correlation function, said sidelobes (203) are located before the time (T1a) corresponding to the time (T1) of starting the acquisition of the input signal (104) by the correlator (7), thus said sidelobes (203) and said pulse (201) are located outside of the obtained ultrasonic echoes waveform (202) and do not interfere with the distance detection procedure.

2. The method according to claim 1, **characterized in that** the length of the encoded excitation sequence is variable depending on the time of flight, wherein the length is selected such that the longer the time of flight is, the longer is the length of the encoded excitation sequence.

3. The method according to any of claims 1 to 2,
**characterized in that**
the transmission of the excitation sequence (101) and the reception of the reflected ultrasonic echoes (102) operate simultaneously.

4. The method according to any of claims 1 to 3,
**characterized in that**
said encoded excitation sequence is composed of two complementary binary Pseudo Noise (PN) sequences A and B (101) sent consecutively, wherein said PN sequences A and B are correlated, particularly cross-correlated, consecutively by a correlator (7).

5. The method according to claim 4, **characterized in that** the results of the correlation are combined to a sum that represents a time-domain waveform (204), wherein a time-domain waveform portion (202) is equivalent to the ultrasonic echo caused by a conventional single excitation pulse, thus providing timing information for detection of targets, particularly distances to obstacles in the surroundings of a vehicle.

6. The method according to any of claims 1 to 5,
**characterized in that**
the method comprises the following steps:
A Start sending of an excitation Pseudo Noise (PN) sequence A (101) at a time T0;
B Wait for period of time (del 105) for which the reflected ultrasonic echoes do not bear useful information, wherein this waiting period can be zero or greater than zero;
C Enable acquisition of data at time (T1), the input signal (104) of the correlator (7) is to be correlated with a corresponding reference PN sequence A;
D Wait for end of PN sequence A (101);
E Wait for the time interval long enough to receive echoes from farthest targets and stop receiving input data (104);
F Complete correlation operation;
G Repeat steps A-F for PN sequence B;
H Sum the correlation results for the PN sequences A and B, the result being the time-domain waveform equivalent to ultrasonic echo (202) of the conventional excitation pulse, plus a condensed pulse (201) with sidelobes (203) bearing the energy of a parasitic signal;
I Process the time-domain waveform (204) to detect distances to surrounding objects.

7. The method of any of claims 1 - 6, **characterized in that** the received ultrasonic signal is converted into a digital received signal, wherein the encoded excitation sequence and the digital received signal are correlated so as to achieve timing information that allows to calculate a distance between the transducers and the target.

8. High sensitive apparatus for car parking ultrasonic sensors, measuring the distance from obstacles in the surroundings of a vehicle by a method according to any one of claims 1 to 7, comprising a control unit (2), said control unit coordinates sending excitation sequences, correlation and detection of distances to obstacles; a Pseudo Noise (PN) code generator (3), said code generator produces encoded sequences; a transmitter: amplifier (4) receiving the encoded sequences and used to adjust excitation pulses energy to a level required for a transmitter transducer (9); a receiver transducer (10) for receiving ultrasonic signals, a receiver amplifier (5) adjusting the received signal amplitude of the receivertransducer to the input voltage span of an analog-digital converter (ADC, 6) and matching the a transducer impedance with an ADC input impedance; the ADC (6) converting the received signal to digital form required by a digital correlator (7); the digital correlator (7) performing correlation operation; and a distance detector (8) determining distances to obstacles,
**characterized in that**
the apparatus is adapted and operable to have an encoded excitation sequence last longer than the time of flight (tof 106) of an ultrasonic signal wave on the way from the transmitter transducer (9) to at least one target (11) and back to the receiver transducer (10).

9. The apparatus of claim 10, **characterized in that** the transmitter transducer (9) and the receiver transducer (10) are formed by separate transducer elements.

10. The apparatus of claim 8 or 9, **characterized in that** the transmitter transducer (9) and the receiver transducer (10) are arranged in a common sensor enclosure.

11. The apparatus of claim 8, **characterized in that** the transmitter transducer (9) and the receiver transducer (10) are formed by a single transducer element for transmission and reception, wherein said apparatus comprises an adapter front-end (12), said front-end isolates a signal input from a signal output..

12. The apparatus of any of claims 8-10, wherein said code generator (3) produces encoded sequences of variable length to adjust the distance detection sensitivity.

## Patentansprüche

1. Verfahren zum hochempfindlichen Erfassen von Zielen (11), insbesondere zum Messen des Abstands von Hindernissen in der Umgebung eines Fahrzeugs, mittels Ultraschall, wobei eine kodierte Anregungssequenz (101) an einen Ultraschallsenderwandler (9) gesendet und dann in Form von kodierten Ultraschallimpulsen in die Luft abgegeben wird, wobei reflektierte Ultraschallechos von einem Ultraschall-Empfängerwandler (10; 9) erfasst und verarbeitet werden, um Ziel- oder Abstandsinformationen zu erhalten,
**dadurch gekennzeichnet, dass**
die Länge der kodierten Anregungssequenz (101) frei von einer Einschränkung einer Laufzeit (106) einer Ultraschallsignalwelle auf dem Weg von dem Senderwandler (9) zu mindestens einem Ziel (11) und zurück zu dem Empfängerwandler (10; 9) ist und in Abhängigkeit von und gemäß den Anforderungen an das Signal-Rausch-Verhältnis zum Steuern der Empfindlichkeit der Ziel- oder Entfernungserfassung eingestellt ist und länger als die Laufzeit sein kann (tof, 106),
wobei ein parasitäres elektronisches und akustisches Übersprechsignal (103), das von einer Senderkette zu einer Empfängerkette durchdringt, am Eingang (104) eines Analog-Digital-Wandlers (6) der Empfängerkette zusammen mit den Ultraschallechos (102) vorhanden ist, wobei das Störsignal durch einen Korrelationsvorgang gelöscht wird, insbesondere einen Kreuzkorrelationsvorgang, wobei die Energie des Störsignals in einem einzelnen Impuls (201) auf einer äquivalenten Zeitbereichswellenform (204) konzentriert ist, wobei der Impuls (201) eine Korrelationsfunktion der kodierten Anregungssequenz (101) und des durchdrungenen Signals (103) ist, wobei der Impuls zum Zeitpunkt (T0a) angeordnet ist, genau entsprechend der Anregungspulsposition eines konventionellen gepulsten Systems, wobei das parasitäre Durchdringungssignal (103) eine unvollständige abgeschwächte Kopie der Anregungssequenz (101) ist, wobei die Unvollständigkeit einige Seitenkeulen (203) der Kreuzkorrelationsfunktion verursacht, wobei die Seitenkeulen (203) vor der Zeit (T1a) angeordnet sind, die der Zeit (T1) entspricht, zu der die Erfassung des Eingangssignals (104) durch den Korrelator (7) gestartet wird, so dass die Seitenkeulen (203) und der Impuls (201) außerhalb der erhaltenen Ultraschallechowellenform (202) angeordnet sind und das Entfernungserfassungsverfahren nicht stören.

2. Verfahren nach Anspruch 1, **dadurch gekennzeichnet, dass** die Länge der kodierten Anregungssequenz abhängig von der Laufzeit variabel ist, wobei die Länge so gewählt wird, dass je länger die Laufzeit ist, desto länger ist die Länge der kodierten Anregungssequenz.

3. Verfahren nach einem der Ansprüche 1 bis 2,
**dadurch gekennzeichnet, dass**
das Senden der Anregungssequenz (101) und das Empfangen der reflektierten Ultraschallechos (102) gleichzeitig erfolgen.

4. Verfahren nach einem der Ansprüche 1 bis 3,
**dadurch gekennzeichnet, dass**
die kodierte Anregungssequenz aus zwei komplementären binären Pseudorausch-(PN)-Sequenzen A und B (101) besteht, die nacheinander gesendet werden, wobei die PN-Sequenzen A und B durch einen Korrelator (7) nacheinander korreliert, insbesondere kreuzkorreliert, werden.

5. Verfahren nach Anspruch 4, **dadurch gekennzeichnet, dass** die Ergebnisse der Korrelation zu einer Summe kombiniert werden, die eine Zeitbereichswellenform (204) darstellt, wobei ein Zeitbereichswellenformabschnitt (202) dem Ultraschallecho entspricht, das durch einen herkömmlichen einzelnen Anregungsimpuls verursacht wird, wodurch Zeitinformation für die Erfassung von Zielen, insbesondere Entfernungen zu Hindernissen in der Umgebung eines Fahrzeugs, bereitgestellt wird.

6. Verfahren nach einem der Ansprüche 1 bis 5,
**dadurch gekennzeichnet, dass**
das Verfahren die folgenden Schritte umfasst:
A Starten des Sendens einer Pseudorausch-(PN)-Anregungssequenz A (101) zu einem Zeitpunkt T0;
B Warten für eine Zeitspanne (del 105), für die die reflektierten Ultraschallechos keine brauchbare Information enthalten, wobei diese Wartezeit Null oder größer als Null sein kann;
C Ermöglichen der Erfassung von Daten zum Zeitpunkt (T1), wobei das Eingangssignal (104) des Korrelators (7) mit einer entsprechenden Referenz-PN-Sequenz A korreliert werden soll;
D Warten auf das Ende der PN-Sequenz A (101);
E Warten auf das Zeitintervall, das lang genug ist, um Echos von den entferntesten Zielen zu empfangen, und Beenden des Empfangs von Eingangsdaten (104);
F Abschließen des Korrelationsvorgangs;
G Wiederholen der Schritte A-F für die PN-Sequenz B;
H Summieren der Korrelationsergebnisse für die PN-Sequenzen A und B, wobei das Ergebnis die Zeitbereichswellenform ist, die dem Ultraschallecho (202) des konventionellen Anregungspulses entspricht, zuzüglich einem kondensierten Impuls (201) mit Seitenkeulen (203), die die Energie eines Störsignals tragen;
I Verarbeiten der Zeitbereichswellenform (204), um Abstände zu umgebenden Objekten zu erfassen.

7. Verfahren nach einem der Ansprüche 1 - 6, **dadurch gekennzeichnet, dass** das empfangene Ultraschallsignal in ein digitales Empfangssignal umgewandelt wird, wobei die kodierte Anregungssequenz und das digitale Empfangssignal korreliert werden, um eine zeitliche Information zu erhalten, die es ermöglicht, einen Abstand zwischen den Wandlern und dem Ziel zu berechnen.

8. Hochempfindliche Vorrichtung für Fahrzeugeinpark-Ultraschallsensoren, zum Messen des Abstands von Hindernissen in der Umgebung eines Fahrzeugs durch ein Verfahren gemäß einem der Ansprüche 1 bis 7, umfassend eine Steuereinheit (2), wobei die Steuereinheit das Senden von Anregungssequenzen, die Korrelation und das Erfassen von Entfernungen zu Hindernissen koordiniert; einen Pseudo-rausch-(PN)-Codegenerator (3), wobei der Codegenerator kodierte Sequenzen erzeugt; einen Senderverstärker (4), der die kodierten Sequenzen empfängt und dazu dient, die Anregungsimpulsenergie auf ein für einen Senderwandler (9) erforderliches Niveau einzustellen; einen Empfängerwandler (10) zum Empfangen von Ultraschallsignalen; einen Empfängerverstärker (5), der die Empfangssignalamplitude des Empfängerwandlers an die Eingangsspannungsvariationsbreite eines Analog-Digital-Wandlers (ADC, 6) anpasst und eine Wandlerimpedanz an eine ADC-Eingangsimpedanz anpasst; wobei der ADC (6) das empfangene Signal in eine digitale Form umwandelt, die von einem digitalen Korrelator (7) benötigt wird; wobei der digitale Korrelator (7) einen Korrelationsvorgang durchführt; und einen Distanzdetektor (8), der Abstände zu Hindernissen bestimmt,
**dadurch gekennzeichnet, dass**
die Vorrichtung angepasst und betreibbar ist, um eine kodierte Anregungssequenz zu haben, die länger als die Laufzeit (tof 106) einer Ultraschallsignalwelle auf dem Weg vom Senderwandler (9) zu mindestens einem Ziel (11) und zurück zum Empfängerwandler (10) dauert.

9. Vorrichtung nach Anspruch 10, **dadurch gekennzeichnet, dass** der Senderwandler (9) und der Empfängerwandler (10) durch separate Wandlerelemente gebildet sind.

10. Vorrichtung nach Anspruch 8 oder 9, **dadurch gekennzeichnet, dass** der Senderwandler (9) und der Empfängerwandler (10) in einem gemeinsamen Sensorgehäuse angeordnet sind.

11. Vorrichtung nach Anspruch 8, **dadurch gekennzeichnet, dass** der Senderwandler (9) und der Empfängerwandler (10) durch ein einzelnes Wandlerelement zum Senden und zum Empfangen gebildet sind, wobei die Vorrichtung einen Adapter-Front-End (12) umfasst, wobei der Front-End einen Signaleingang von einem Signalausgang isoliert.

12. Vorrichtung nach einem der Ansprüche 8-10, wobei der Codegenerator (3) kodierte Sequenzen variabler Länge erzeugt, um die Empfindlichkeit der Entfernungserfassung einzustellen.

## Revendications

1. Procédé de détection à haute sensibilité de cibles (11), permettant en particulier de mesurer la distance à des obstacles aux alentours d'un véhicule, au moyen d'ultrasons, une séquence d'excitation codée (101) étant envoyée à un transducteur d'émetteur à ultrasons (9) puis émise sous la forme d'impulsions ultrasonores codées dans l'atmosphère, des échos ultrasonores réfléchis étant détectés par un transducteur de récepteur à ultrasons (10 ; 9) et traités pour obtenir des informations de cible ou de distance,
**caractérisé en ce que**
la longueur de la séquence d'excitation codée (101) ne présente aucune restriction d'un temps de vol (106) d'un signal ultrasonore sur la trajectoire allant du transducteur d'émetteur (9) jusqu'à au moins une cible (11) et au retour depuis le transducteur de récepteur (10 ; 9), et elle est ajustée en fonction des exigences concernant le rapport signal sur bruit et conformément à celles-ci afin de contrôler la sensibilité de la détection de cible ou de distance, et elle peut être plus longue que ledit temps de vol (tof, 106),
dans lequel un signal parasite électronique et de diaphonie acoustique (103) qui pénètre depuis une chaîne d'émission jusqu'à une chaîne de réception est présent à l'entrée (104) d'un convertisseur analogique vers numérique (6) de la chaîne de réception en même temps que lesdits échos ultrasonores (102), ledit signal parasite étant annulé par une opération de corrélation, en particulier une opération d'Inter corrélation, l'énergie dudit signal parasite étant concentrée en une impulsion unique (201) sur un signal équivalent (204) dans le domaine du temps, ladite impulsion (201) est une fonction de corrélation de la séquence d'excitation codée (101) et du signal pénétré (103), ladite impulsion est située à l'instant (T0a) correspondant exactement à la position de l'impulsion d'excitation d'un système impulsionnel conventionnel, le signal parasite pénétré (103) est une copie incomplète atténuée de la séquence d'excitation (101), l'incomplétude génère certains lobes latéraux (203) d'une fonction d'Inter corrélation, lesdits lobes latéraux (203) sont situés avant l'instant (T1a) correspondant à l'instant (T1) de démarrage de l'acquisition du signal d'entrée (104) par le corrélateur (7),
de ce fait lesdits lobes latéraux (203) et ladite impulsion (201) sont situés à l'extérieur du signal d'écho ultrasonore obtenu (202) et n'interfèrent pas avec la procédure de détection de distance.

2. Procédé selon la revendication 1, **caractérisé en ce que** la longueur de la séquence d'excitation codée est variable en fonction du temps de vol, la longueur étant sélectionnée de telle sorte que plus le temps de vol est long, plus la longueur de la séquence d'excitation codée est longue.

3. Procédé selon l'une quelconque des revendications 1 et 2,
**caractérisé en ce que**
la transmission de la séquence d'excitation (101) et la réception des échos ultrasonores réfléchis (102) se produisent simultanément.

4. Procédé selon l'une quelconque des revendications 1 à 3,
**caractérisé en ce que**
ladite séquence d'excitation codée est composée de deux séquences complémentaires A et B (101) de pseudo bruit (PN) binaire envoyées consécutivement, lesdites séquences A et B de bruit PN étant corrélées, en particulier Inter corrélées, consécutivement par un corrélateur (7).

5. Procédé selon la revendication 4, **caractérisé en ce que** les résultats de la corrélation sont combinés à une somme qui représente un signal (204) dans le domaine du temps, une partie (202) du signal dans le domaine du temps étant équivalente à l'écho ultrasonore provoqué par une impulsion classique d'excitation unique, ce qui fournit des informations sur la synchronisation en vue de la détection de cibles, en particulier de distances à des obstacles aux alentours d'un véhicule.

6. Procédé selon l'une quelconque des revendications 1 à 5,
**caractérisé en ce que**
le procédé comprend les étapes suivantes :
A démarrer en envoyant une séquence d'excitation A (101) de pseudo bruit (PN) à un instant T0,
B attendre un intervalle de temps (del 105) pour lequel les échos ultrasonores réfléchis ne transportent pas d'information utile, cette période d'attente pouvant être nulle ou non nulle,
C autoriser l'acquisition de données à l'instant (T1), le signal d'entrée (104) du corrélateur (7) devant être corrélé avec une séquence A correspondante de bruit PN de référence,
D attendre la fin de la séquence A (101) de bruit PN,
E attendre pendant un intervalle de temps suffisamment long pour recevoir des échos en provenance des cibles les plus lointaines et arrêter la réception des données (104) en entrée,
F achever l'opération de corrélation,
G répéter les étapes A à F pour une séquence B de bruit PN,
H sommer les résultats de corrélation pour les séquences A et B de bruit PN, le résultat étant le signal dans le domaine du temps équivalent à un écho ultrasonore (202) de l'impulsion classique d'excitation plus une impulsion condensée (201) comportant des lobes latéraux (203) portant l'énergie d'un signal parasite,
I traiter le signal (204) dans le domaine du temps pour détecter les distances aux objets environnants.

7. Procédé selon l'une quelconque des revendications 1 à 6, **caractérisé en ce que** le signal ultrasonore est converti en un signal numérique reçu, la séquence d'excitation codée et le signal numérique reçu étant corrélés de sorte à obtenir des informations de synchronisation qui autorisent le calcul d'une distance entre les transducteurs et la cible.

8. Appareil à haute sensibilité pour des capteurs à ultrasons de stationnement de voitures, mesurant la distance à des obstacles situés aux alentours d'un véhicule, grâce à un procédé conforme à l'une quelconque des revendications 1 à 7, comprenant une unité de commande (2), ladite unité de commande coordonnant l'envoi de séquences d'excitation, la corrélation et la détection de distance à des obstacles ; un générateur de code (3) de pseudo bruit (PN), ledit générateur de code générant des séquences codées ; un amplificateur d'émetteur (4) recevant les séquences codées et utilisé pour ajuster l'énergie d'impulsions d'excitation à un niveau requis pour un transducteur d'émetteur (9) ; un transducteur de récepteur (10) destiné à recevoir des signaux ultrasonores, un amplificateur de récepteur (5) ajustant l'amplitude du signal reçu du transducteur de récepteur à l'excursion en tension d'entrée d'un convertisseur analogique vers numérique (ADC, 6) et adaptant l'impédance du transducteur à l'impédance d'entrée du convertisseur ADC ; le convertisseur ADC (6) convertissant le signal reçu en une forme numérique requise par un corrélateur (7) numérique ; le corrélateur (7) numérique effectuant une opération de corrélation ; ainsi qu'un détecteur de distance (8) déterminant les distances aux obstacles,
**caractérisé en ce que**
l'appareil est conçu et peut être mis en oeuvre pour qu'une séquence d'excitation codée dure plus longtemps que le temps de vol (tof, 106) d'un signal ultrasonore sur le chemin allant du transducteur d'émetteur (9) à au moins une cible (11) et en retour vers le transducteur de récepteur (10).

9. Appareil selon la revendication 10, **caractérisé en ce que** le transducteur d'émetteur (9) et le transducteur de récepteur (10) sont formés grâce à des éléments séparés de transducteurs.

10. Appareil selon la revendication 8 ou la revendication 9, **caractérisé en ce que** le transducteur d'émetteur (9) et le transducteur de récepteur (10) sont disposés dans une enceinte commune de capteurs.

11. Appareil selon la revendication 8, **caractérisé en ce que** le transducteur d'émetteur (9) et le transducteur de récepteur (10) sont formés par un unique élément transducteur destiné à l'émission et la réception, ledit appareil comprenant un dispositif interface adaptateur (12), ledit dispositif interface isolant une entrée de signal d'une sortie de signal.

12. Appareil selon l'une quelconque des revendications 8 à 10, dans lequel ledit générateur de code (3) produit des séquences codées de longueur variable pour ajuster la sensibilité de détection aux distances.
